Europäisches Patentamt

European Patent Office

Office européen des brevets

(11) Publication number: **0 103 208**
A2

# EUROPEAN PATENT APPLICATION

(21) Application number: **83108158.3**

(51) Int. Cl.³: **F 01 P 1/00, H 01 M 6/50**

(22) Date of filing: **18.08.83**

(30) Priority: **19.08.82 US 409696**

(43) Date of publication of application: **21.03.84**
**Bulletin 84/12**

(84) Designated Contracting States: **DE FR GB IT**

(71) Applicant: **Energy Research Corporation, 3 Great Pasture Road, Danbury Connecticut 06810 (US)**

(72) Inventor: **Maru, Hansraj C., 1 Coach Drive, Brookfield Center Connecticut 06805 (US)**
Inventor: **Faroogue, Mohammad, 2 Timberlane Drive, Huntington Connecticut 06484 (US)**

(74) Representative: **Abitz, Walter, Dr.-Ing. et al, Abitz, Morf, Gritschneder, Freiherr von Wittgenstein Postfach 86 01 09, D-8000 München 86 (DE)**

(54) Apparatus for maintaining the temperature of a motor below the temperature of a primary gas flowing past the motor and a gas cooled fuel cell system.

(57) An apparatus for maintaining motors at low operating temperatures during recirculation of hot gases in fuel cell operations and chemical process such as fluidized bed coal gasification. The apparatus includes a means for separating the hot process gas from the motor using a secondary lower temperature gas, thereby minimizing the temperature increase of the motor and associated accessories.

Apparatus for maintaining the temperature of a motor
below the temperature of a primary gas flowing past
the motor and a gas cooled fuel cell system

## Background of the Invention

The present invention relates to an apparatus and method for maintaining motors at low operating temperatures. In particular, the present invention is directed to a method and apparatus for maintaining motors at low temperatures during recirculation of hot fuel cell gases or gases utilized in other chemical processes.

Blowers are generally required in gas cooled fuel cell systems and other chemical systems for recirculating hot gases. In many blowers the motor is mounted directly on the fan assembly and is therefore exposed to the high gas temperatures. Standard specifications for commercially available blowers rate the operating temperature of the motor at less than the operating temperature conditions encountered in many fuel cell systems. Blower failures are sometimes caused by the temperature susceptibility of the blower motor windings and bearings. In addition, the blower motor itself produces heat as a result of power dissipation. Therefore, the temperature inside the motor housing is generally higher than the outside temperature. The life of a blower bears a strong correlation with the motor housing temperature and therefore indirectly to the temperature of the bulk gas that is being recirculated. As an example, the Aximax 3 blowers of Rotron, Inc., have a life expectancy of 10,000 hours at an operating temperature of 100°C. At 120°C its life expectancy drops to 5,000 hours. Typical fuel cells require recirculation of hot gases of on the order of about 150°C.

One way to adapt these blowers to fuel cell use is to cool the recirculating gas in a heat exchanger (HX) to an acceptable temperature before it enters the blower and then preheat the gas to the required temperature before it reenters the fuel cell. This scheme is inherently inefficient and burdensome because of the cooling and reheating cycle. For example, the recirculation loop in a pressurized phosphoric acid fuel cell system has a high dew point, i.e., about 115°C, therefore cooling in the HX below this temperature will require removing of condensate from the HX.

Water-cooling of the motor housing is another possibility but is not preferred because of mechanical difficulties associated with effective implementation. In addition, water cooling may cool blower parts below the dew point, resulting in condensation on the blower parts.

Another option for adapting these blowers to fuel cell operating conditions is to remove the motor from the fan and place it away from the hot gases, passing an external drive shaft through a rotating or mechanical seal for centrifugal type blower. This option is voluminous, expensive and difficult to implement. Furthermore, in portable fuel cells, this configuration adds undesirable weight.

U.S. Patent No. 3,801,372 to Shaw discloses one way to remove waste heat from fuel cells. The Shaw method includes recirculating a liquid coolant through the fuel cell. The invention involves an apparatus that eliminates the need for a mechanical pump for liquid coolant circulation. The present invention, however, relates to gas cooling of fuel cells requiring a gas blower for gas recirculation.

An example of a recirculating gas cooled fuel cell can be found in U.S. Patent No. 4,192,906 to Maru and in U.S. Patent No. 4,276,355 to Kothmann et al. However, neither patent is directed to the specific method or apparatus used in the present invention to recirculate the hot gases.

## Summary of the Invention

It is an object of the present invention to provide an apparatus for maintaining the temperature of the motor below the temperature of a gas flowing past the motor.

It is another object of the present invention to provide an apparatus for recirculating hot gases in chemical processes.

It is still another object of the present invention to provide an apparatus for recirculating hot gases in gas cooled fuel cells.

It is a further object of the present invention to provide an apparatus for hot gas recirculation that is cost, weight and volume efficient.

It is yet another object of the invention to provide a method and apparatus for recirculation of hot gases containing condensible vapor whereby condensation on the blower is prevented.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

To achieve the foregoing and other objects and in accordance with the purpose of the present invention, as embodied and broadly described herein the apparatus of the present invention comprises a means defining a duct for flowing a primary gas at a first temperature, a blower including a propeller in the duct for drawing the primary gas along said duct, a motor coupled to the blower propeller for driving the blower propeller, a means for flowing a secondary gas at a temperature lower than the temperature of the primary gas about the motor, and a means for separating the primary and secondary gases one from the other to preclude substantial heat transfer between the motor and the primary gas.

In a preferred embodiment of the apparatus of the present invention, the means for separating includes a shell positioned about the motor.

In a further preferred embodiment of the apparatus of the present invention the blower includes rotating vanes.

In another preferred embodiment of the apparatus of the present invention the means for separating includes a cylindrical

5 0103208

shell having at least one opening adapted to engage with the means for flowing the secondary gas.

In a further preferred embodiment of the present invention the means for separating includes a cylindrical shell having at least one conical end portion adapted to engage with the means for flowing the secondary gas.

In a still further preferred embodiment of the apparatus of the present invention the means for flowing the secondary gas includes a duct having one end terminating within the separating means.

In still another preferred embodiment of the present invention the apparatus further includes a mixing means located in the duct defining means downstream from the motor wherein the secondary gas and the primary gas are intermixed.

In a further preferred embodiment of the present invention the means for flowing the secondary gas includes an insulating material to substantially eliminate any heating of the secondary gas prior to passage about the motor.

Another aspect of the present invention includes a gas cooled fuel cell system comprising a heat exchanger for cooling process gases connected to a fuel cell and an apparatus located downstream of the heat exchanger and connected to the heat exchanger and the fuel cell. The apparatus comprises means defining a duct for flowing the process gas at a first temperature, a blower in the duct for drawing the process gas along the duct, a motor coupled to the propeller for driving the propeller, a means for flowing a fresh feed secondary gas about the motor at a temperature below the temperature of the process gas and a means for separating the process gas and fresh feed gas one from the other to preclude substantial heat transfer between the motor and the process gas.

In a preferred embodiment of this aspect of the present invention the separator means includes a shell positioned about the motor.

In a further preferred embodiment of this aspect of the present invention the separating means includes a cylindrical shell having at least one opening adapted to engage with the means for flowing the fresh gas feed.

In a further preferred embodiment of the present invention the means for separating includes a cylindrical shell having at least one conical end portion adapted to engage with the means for flowing the secondary gas.

In a still further preferred embodiment of this aspect of the present invention the blower includes rotating vanes.

In another preferred embodiment of this aspect of the present invention the means for flowing the fresh gas includes a duct having one end terminating within the separating means.

In still another preferred embodiment of this aspect of the present invention the system includes a mixing means located in the duct defining means downstream from the motor wherein the process gas and fresh gas are intermixed.

The apparatus and system of the present invention alleviate the problems associated with the operation of conventional blowers at high temperatures (i.e., at high temperature life expectancy of blower motor decreases dramatically). The present invention provides a simple arrangement which enables one to maintain the atmosphere about the blower motor at a relatively low temperature. Accordingly, the temperature of the blower motor remains low, dramatically increasing the expected lifetime for motors in this type of environment. The blower of the present invention can be used in chemical processes where recirculated high temperature gases are coupled with "make-up" gases such as those used in fluidized beds. In addition, the blower of the present invention may also be used in processes where a make-up feed is not normally essential. In such cases a small quantity of a cold gas may be added to implement this scheme.

<div align="center">Brief Description of the Drawings</div>

The accompanying drawings, which are incorporated in and form a part of the specification, illustrate a preferred embodiment of the present invention and, together with the description, serve to explain the principles of the invention. Like or corresponding elements are similarly numbered in each of the various figures. In the drawings:

Figure 1 depicts a schematic representation of a gas cooled fuel cell system according to the present invention;

Figure 2 depicts a cross-section schematic view of a blower according to the present invention;

Figure 3 depicts a partial cutaway, isometric view of a blower according to the present invention;

8  0103208

Figure 4 is a graph illustrating the temperatures of the blower housing at various positions versus the gas temperature after mixing.

### Detailed Description of the Invention

Reference will now be made in detail to the present preferred embodiment of the invention, an example of which is illustrated in the accompanying drawings.

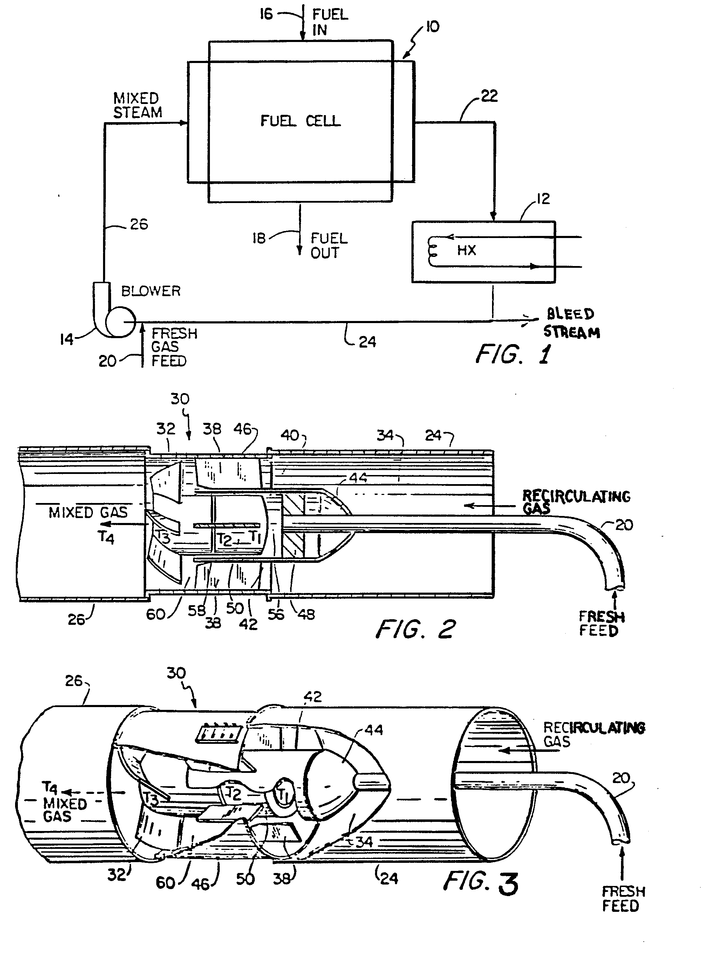

Gas flow in a gas cooled fuel cell system is depicted schematically in Figure 1. As illustrated therein, the basic element of the system is a fuel cell 10 in which heat is produced during operation. Removal of this heat is accomplished by the use of a cooling loop comprising ducts 22, 24, 26, heat exchanger 12 and blower 14. The heat is generated in the fuel cell from electrochemical reactions at the anode and cathode and from irreversibilities resulting from overpotential and ohmic effects as well as from other sources.

The cooling gas removes heat from fuel cell 10 and passes out of cell 10 through duct 22. These gases may then be passed through heat exchanger (HX) 12 where useful heat may be removed for other purposes, for example such as to produce steam or to provide space heat or air conditioning for a building.

Typically the process gases exit the fuel cell at a temperature of about on the order of 190°C. In passing through HX 12, it may experience a temperature drop of about on the order of 50°C. The temperature of the bulk process gas entering blower 14 will, therefore, be on the order of about 140°C. As a result of applicants' invention, the mixed stream at 26, on the downstream side of blower 14 which is recirculated back to the fuel cell, will have a temperature of about on the order of 135°C.

It should be understood that gas (fuel) inlet 16 and gas (fuel) outlet 18 of fuel cell 10 can also be connected to a recirculating circuit comprising a HX, fresh gas feed, and a blower similar to that described above.

The apparatus of the present invention is shown in detail in Figures 2 and 3. The apparatus of the present invention comprises a means defining a duct for flowing a primary (process) gas at a first temperature, a blower in the duct for drawing the process gas along the duct, a motor coupled to the blower propeller for driving the propeller, means for flowing a secondary (fresh) gas at a temperature lower than the temperature of the process gas about the motor, and means for separating the process gas and fresh gas one from the other to preclude substantial heat transfer between the motor and the process gas.

With specific reference to Figures 2 and 3, the apparatus of the present invention is set forth in detail. .

The hot bulk process gas from HX 12 enters apparatus 30 through duct 24. Due to the negative pressure induced by rotating propellers 32, the proces gas will be sucked through duct 24 and toward flow distribution (fixed) vanes 38 downstream of annular plenum 40 defined by outer blower shell 46, duct 24 and generally concentric separator shell 42. Preferably, separator shell 42 will have an aerodynamic conical portion 44 facing the incoming bulk gas in order to lower the pressure drop in apparatus.

It is also preferred that shell 42 be made of a heat insulating material to insulate fresh air and/or fuel feed 20 from the process gas until such time as the fresh gas has served its function (as further described hereinbelow) of cooling the blower motor (not shown).

Duct 24 is joined to outer blower shell 46 which defines an annular area about separator shell 42. The fresh air and/or fuel feed duct 20 is aligned in a coaxial manner to the duct work. It may be of any suitable material such as stainless steel but preferably will be lined with or made of a heat insulator material such as a ceramic or plastic. Duct 20 then passes through separator head 44 and terminates at ring support 48 which supports duct 20 within separator shell 42. Preferably, duct 20 is contoured to impose as little aerodynamic drag as possible on the flow of recirculating process gas.

The motor (not shown) for rotating propellers 32 is typically located within motor housing 50. In a conventional arrangement, the hot process gas enters apparatus 30, passes over motor housing 50 and is exhausted at $T_4$. In passing over housing 50, the hot gas will actually experience a temperature rise from the heat generated by the blower motor located inside housing 50.

In accordance with the present invention, a fresh gas feed is used to cool motor housing 50. The relatively cool fresh gas feed, which may preferably be on the order of about 1-10% of the hot bulk gas stream, is fed through duct 20 to space 56 upstream of, and adjoining motor housing 50 where it cools housing 50.

11 0103208

Typically, housing 50 is made of metal. The fresh gas feed has the effect of holding the blower motor at approximately the temperature of the fresh gas feed. This will typically be room temperature, but cooler gas may be used if desired or necessary. The fresh gas then travels along housing 50 through annular space 58, preferably, in a generally uniform manner. As it passes along housing 50, the fresh cool gas will gradually rise in temperature as a result of heat dissipated by the motor. This gas flow will also tend to cool housing 50 and keep the motor at or near the temperature of the incoming fresh gas feed.

Preferably, the fresh gas feed and hot bulk process gas are separated for as long as possible and mixed at terminus 60 of separator 42. The mixed gases are fed via blower propellers 32 into duct 26 and recirculated back to fuel cell 10.

In particular, the present invention provides a system for recirculating hot gases from gas cooled fuel cells in which an axial blower (see Figures 2 and 3) is utilized. That is, the blower has a motor driven fan mounted directly on the fan assembly and exposed to the hot gases. However, it should be understood that other blower types may also be employed. In accordance with the present invention, the blower motor and housing are enclosed in separator shell which shields the motor from exposure to hot recirculating bulk coolant gas. Fresh cool gas in the form of air and/or fuel is passed about motor housing to cool the blower motor. The air and/or fuel then passes through propellers and mixes with the recirculating bulk cooling gas. The gas cooled blower motor housing allows the blower motor to run at a relatively low temperature and also prevents condensate from forming on the blower motor.

It should be understood that in fuel cells where safety is paramount the cooling media should preferably be air. However, air cooling requires more blower power than fuel cooling. Where blower power consumption is crucial and leak containment is not a problem, the cooling media may be fuel. Alternatively, a mixture of air or fuel and other gases may be used.

For large fuel cell units which are normally pressurized, the fresh feed is supplied under pressure. This will allow for better blower cooling. Where small installations are involved, fuel cells will normally operate at atmospheric pressure and in such cases the fresh feed will be induced by the blower fan.

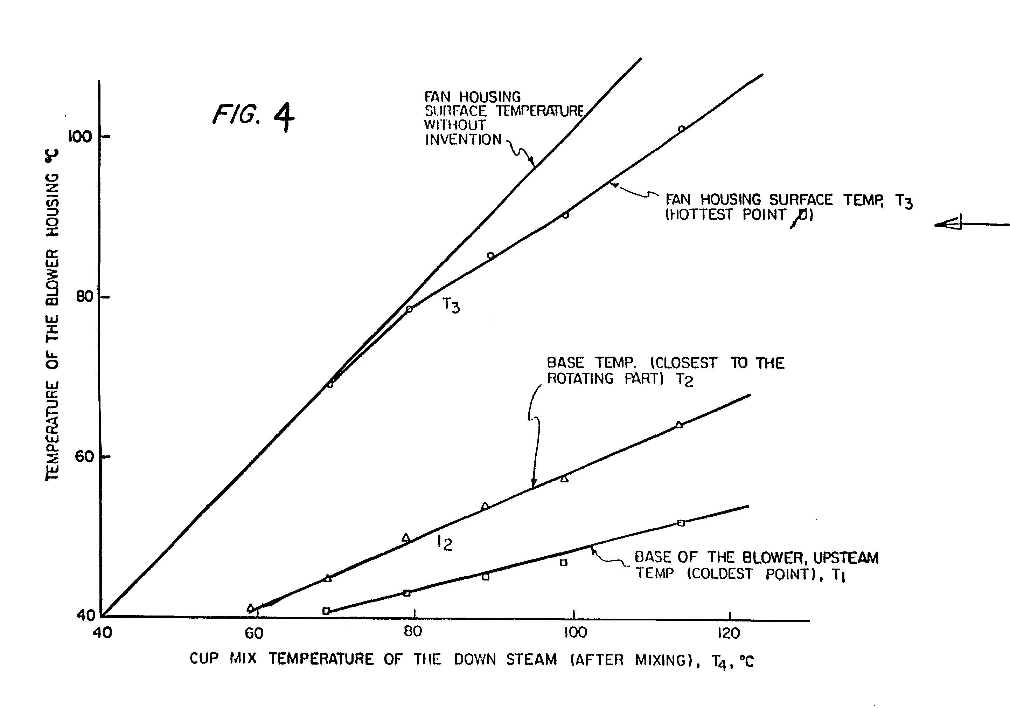

Figure 4 depicts, in graph form, the performance of the present invention in operation. A Rotron Aximax 3 (Model 422DH) blower was used to test the effects of the thermal isolation of the hot gas stream from the blower motor by adding a relatively small quantity of fresh air feed (about 3% fresh air feed was used). The apparatus employed to shield the blower housing from the hot bulk gases is substantially the same as that described in Figures 2 and 3. Fresh air (@ ≈ 22°C) was flashed around the housing 50 and the rotating parts by using a specially designed stainless steel sheet metal enclosure acting as separator 42 between the two gas streams. Temperatures of the blower housing were measured at three different places along the length

(locations $T_1$, $T_2$ and $T_3$ as shown in Figures 2 and 3) and are plotted in Figure 4 as a function of the cup mix temperature $T_4$ of the two gases, i.e., mixed gas temperature. The results demonstrate that the temperature at locations $T_1$, $T_2$ and $T_3$ are significantly lower than the cup mix temperature $T_4$. The hottest point on the blower, $T_3$, remained at 15°C below the cup mix temperature $T_4$ of 120°C. The coldest point on the blower remained at 65°C below the cup mix temperature of $T_4$ of 120°C. In the absence of a cold stream the temperature of the blower will ordinarily be higher than the bulk gas temperature because, as explained previously, the blower itself dissipates heat into the gas stream. For the Rotron Aximax 3 Model 422DH blower the expected rise in temperature inside the motor housing is over 28°C.

Blower temperatures lower than those reported in Figure 4 can easily be achieved by incorporating a more optimal aerodynamic geometry for the separator and duct work and by using an insulating material for the separator instead of stainless steel. In addition, care must be taken to optimize the gap between the separator and the rotor, and the separator thickness should be as small as practicable.

In summary, the apparatus and system of the present invention will dramatically increase the lifetime of blower motor used in high temperature environments. The apparatus of the present invention provides an economical and efficient means for lowering the temperature of the gases adjacent to the motor enabling any

0103208

heat generated by the operation of the motor to be quickly dissipated. Accordingly, the motor operates at a cooler temperature increasing its useful lifetime in this type of environment.

The foregoing description of a preferred embodiment of the invention has been presented for purposes of illustration and description. It is not intended to be exhaustive or to limit the invention to the precise form disclosed, and obviously many modifications and variations are possible in light of the above teaching. The embodiment was chosen and described in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

0103208

## Claims

1.  Apparatus for maintaining the temperature of a motor below the temperature of a primary gas flowing past the motor comprising:

a. means defining a duct for flowing a primary gas at a first temperature,

b. a blower including a propeller in said duct for drawing the primary gas along said duct,

c. a motor coupled to said blower propeller for driving said blower propeller,

d. means for flowing a secondary gas at a temperature lower than the temperature of the primary gas about said motor, and

e. means for separating the primary and secondary gases one from the other to preclude substantial heat transfer between said motor and the primary gas.

2.  The apparatus of claim 1 wherein the means for separating includes a shell positioned about the motor.

0103208

3. The apparatus of claims 1 or 2 wherein the means for separating includes a cylindrical shell having at least one end adapted to engage with the means for flowing the secondary gas.

4. The apparatus of claim 3 wherein said cylindrical shell has at least one conical end portion adapted to engage with said means for flowing the secondary gas.

5. The apparatus of claim 1 wherein said blower further includes rotating fan vanes.

6. The apparatus of claims 1, 2, 4, or 5 further including a mixing means located in the duct defining means downstream from said motor wherein the secondary gas and the primary gas are intermixed.

7. A gas cooled fuel cell system comprising:

a. a fuel cell,

b. a heat exchanger for cooling process gases connected to said fuel cell; and

c. an apparatus connected to said fuel cell and said heat exchanger and located downstream of said heat exchanger, said apparatus comprising means defining a duct for flowing the process gas at a first temperature, a blower including a propeller in the duct for drawing the process gas along the duct, a motor coupled to said blower propeller for driving said blower propeller, a means for flowing a fresh feed secondary gas about the motor at a temperature below the temperature of the process gas, and a means for separating the process gas and fresh feed gas one from the other to preclude substantial heat transfer between the motor and the process gas.

0103208

8.    The system of claim 7 wherein the means for separating includes a shell positioned about the motor.

9.    The system of claims 7 or 8 wherein the means for separating includes a cylindrical shell having at least one end adapted to engage with the means for flowing the secondary gas.

10.   The system of claim 8 wherein said cylindrical shell has at least one conical end portion adapted to engage with said means for flowing the secondary gas.

11.   The system of claim 7 wherein said blower further includes rotating fan vanes.

12.   The system of claims 7, 8, 10 or 11 further including a mixing means located in the duct defining means downstream from said motor wherein the secondary gas and the primary gas are intermixed.

0103208

FIG. 1

FIG. 2

FIG. 3

FIG. 4

Y-axis: TEMPERATURE OF THE BLOWER HOUSING °C

X-axis: CUP MIX TEMPERATURE OF THE DOWN STEAM (AFTER MIXING), $T_4$, °C

FAN HOUSING SURFACE TEMPERATURE WITHOUT INVENTION

FAN HOUSING SURFACE TEMP, $T_3$ (HOTTEST POINT ⌀)

$T_3$

BASE TEMP. (CLOSEST TO THE ROTATING PART) $T_2$

$T_2$

BASE OF THE BLOWER, UPSTEAM TEMP (COLDEST POINT), $T_1$